# EUROPÄISCHE PATENTSCHRIFT

(11) **EP 4 377 076 B1**
(45) Veröffentlichungstag und Bekanntmachung des Hinweises auf die Patenterteilung: **28.01.2026**
(21) Anmeldenummer: 22764307.9
(22) Anmeldetag: 14.07.2022
(51) Int. Cl.: B29D 30/32, B60C 15/00, B29D 30/20

(54) **FAHRZEUGLUFTREIFEN UND VERFAHREN ZUM AUFBAUEN EINER REIFENKARKASSE EINES FAHRZEUGLUFTREIFENS AUF EINER KARKASSMASCHINE**
VEHICLE TYRE AND METHOD FOR CONSTRUCTING A TYRE CARCASS OF A VEHICLE TYRE ON A CARCASS MACHINE
PNEU DE VÉHICULE ET PROCÉDÉ DE CONFECTION D'UNE CARCASSE DE PNEU DE VÉHICULE SUR UNE MACHINE À CARCASSE

(30) Priorität: 28.07.2021 DE 102021208132
(43) Veröffentlichungstag der Anmeldung: 05.06.2024
(73) Patentinhaber: Continental Reifen Deutschland GmbH, 30175 Hannover (DE)
(72) Erfinder: KOVACIK, Michal, 30165 Hannover (DE); BAGNIEWSKI, Simon, 30165 Hannover (DE); GIBHARDT, Sabrina, 30165 Hannover (DE)
(74) Vertreter: Continental Corporation
(86) Internationale Anmeldenummer: PCT/DE2022/200158
(87) Internationale Veröffentlichungsnummer: WO 2023/006162

(56) Entgegenhaltungen:
- WO-A1-2006/003054
- US-A1- 2015 165 832
- US-A1- 2020 164 688

## Beschreibung

Die Erfindung betrifft einen Fahrzeugluftreifen mit einem profilierten Laufstreifen, einem zumindest zwei Lagen aufweisenden Gürtel, einer Innenschicht, Wulstbereichen mit Wulstkernen und Kernprofilen, einer Karkasseinlage mit einer ersten Karkasslage und einer zweiten Karkasslage, wobei die erste Karkasslage einen von Wulstbereich zu Wulstbereich und entlang der Innenschicht durchgehend verlaufenden Abschnitt, an den Wulstkernen in axialer Richtung verlaufende Umbugabschnitte und weitere außen in den Wulstbereichen verlaufende Abschnitte aufweist, und wobei die zweite Karkasslage einen in Kontakt mit der ersten Karkasslage verlaufenden von Wulstbereich zu Wulstbereich durchgehenden Abschnitt aufweist und in den Wulstbereichen endet, wobei die zweite Karkasslage in den Wulstbereichen zwischen der ersten Karkasslage auf der einen Seite und den Kernprofilen auf der anderen Seite sowie in Kontakt mit diesen Bauteilen verläuft.

Fahrzeugluftreifen, deren Radialkarkasse aus zwei Karkasslagen besteht, sind an sich bekannt. Bei einer dieser bekannten Ausführungen verläuft die erste Karkasslage als sogenannte C-Lage durchgehend von Wulstbereich zu Wulstbereich, um die Wulstkerne von innen nach außen und ist anschließend jeweils in den Bereich radial innerhalb des Gürtelverbandes rückgeführt. Die rückgeführten Abschnitte sind in Kontakt mit dem von Wulstbereich zu Wulstbereich durchgehenden Abschnitt der Karkasslage. Die zweite Karkasslage verläuft ebenfalls durchgehend von Wulstbereich zu Wulstbereich jedoch komplett außerhalb der ersten Karkasslage und endet in den Wulstbereichen seitlich der Wulstkerne. Bei einer alternativen Ausführung endet die erste Karkasslage in bekannter Weise Hochschläge bildend im Bereich der Seitenwände bzw. im Bereich zwischen den Kernprofilen und dem Gürtel. Beim Aufbauen der Reifenkarkasse auf der Karkasstrommel einer Karkassmaschine werden nach dem Auflegen der ersten Karkasslage mit seitlichen Überständen auf die seitlichen Überstände der Karkasslage die Kernpakete aus Wulstkernen und Kernprofilen gesetzt, die seitlichen Überstände umgeschlagen und anschließend die zweite Karkasslage aufgebracht. Im Zuge des weiteren Aufbaus der Reifenkarkasse mit Hornprofilen und Seitenwänden verbleiben oft Luftkanäle entlang der Enden der zweiten Karkasslage. Bei der Vulkanisation des fertig aufgebauten Rohreifens in einer Vulkanisationsform verursachen solche Lufteinschlüsse ein lokales "Einziehen" des Gummimaterials, wodurch am fertigen Reifen außenseitig schmale, in Umfangsrichtung verlaufende Vertiefungen ausgebildet werden, die die Qualität der Reifen beeinträchtigen.

Ein Fahrzeugluftreifen der eingangs genannten Art ist beispielsweise aus der US 2020/0164688 A1 bekannt. Der Reifen ist beispielsweise ein Motorradreifen oder ein Fahrzeugluftreifen für Personenkraftwagen bzw. Nutzfahrzeuge. Der Reifen weist einen Laufstreifen, einen ein, zwei oder mehr als zwei Lagen aufweisenden Gürtel, eine Innenschicht, Wulstbereiche mit Wulstkernen und Kernprofilen sowie eine Karkasseinlage mit einer ersten Karkasslage und einer zweiten Karkasslage auf. Die erste Karkasslage umfasst einen von Wulstbereich zu Wulstbereich durchgehend verlaufenden Abschnitt, an den Wulstkernen in axialer Richtung verlaufende Umbugabschnitte und weitere außen in den Wulstbereichen verlaufende Abschnitte. Die zweite Karkasslage weist einen die erste Karkasslage kontaktierenden, von Wulstbereich zu Wulstbereich durchgehenden Abschnitt auf und endet in den Wulstbereichen im Bereich und in Kontakt mit den Kernprofilen. Die Enden der zweiten Karkasslage befinden sich auf derselben Höhe wie die radial äußere Oberfläche der Wulstkerne oder radial außerhalb der Oberfläche der Wulstkerne, sodass diese gegenüber den Wulstkernen in Richtung zum Laufstreifen versetzt enden. Die Karkasseinlage soll eine hohe Steifigkeit und eine gute Haltbarkeit aufweisen. Ferner ist ein Verfahren zum Aufbauen einer Reifenkarkasse eines Fahrzeugluftreifens auf einer Karkassmaschine mit einer expandierbaren Karkasstrommel und zwei seitlich der Karkasstrommel angeordneten expandierbaren Balgträgern offenbart.

Aus der WO 2006/003054 A1 ist ein weiteres derartiges Verfahren bekannt, bei welchem das Auflegen von Reifenbauteilen auf die Karkasstrommel unterstützt wird und ein automatisches Spleißen der Endabschnitte ermöglich sein soll.

Die US 2018/0117969 A1 zeigt in Fig. 3 einen Fahrzeugluftreifen für Personenkraftwagen mit einer Karkasse mit drei Karkasslagen, von welchen die beiden weiter reifeninnenseitig verlaufenden Lagen um die Wulstkerne von innen nach außen herumgeführt sind und Hochschläge bilden, die gegeneinander in radialer Richtung versetzt enden. Die dritte Karkasslage ist die äußerste der drei Karkasslagen, verläuft durchgehend von Wulstbereich zu Wulstbereich in Kontakt mit der mittleren Karkasslage und endet in den Wulstbereichen jeweils außenseitig im Bereich der radial inneren Enden der Wulstkerne.

Der Erfindung liegt die Aufgabe zugrunde, das Entstehen der oben erwähnten Luftkanäle bzw.-einschlüsse und das Ausbilden von unschönen Vertiefungen an der Außenseite des vulkanisierten Reifens zu vermeiden, um qualitativ einwandfreie Reifen herzustellen.

Was den Fahrzeugluftreifen betrifft wird die gestellte Aufgabe erfindungsgemäß dadurch gelöst, dass die zweite Karkasslage außen seitlich der Wulstkerne sowie in Kontakt mit den Wulstkernen endet.

Das Verfahren gemäß der Erfindung weist folgende, nacheinander ablaufende Schritte auf:
a) Expandieren der Balgträger, sodass die Außenflächen der unaufgeblähten Bälge gemeinsam mit der Außenfläche der expandierten Karkasstrommel eine einheitliche zylindrische Auflagefläche bilden,
b) Aufbringen einer Innenschicht und einer ersten, seitlich über die Karkasstrommel überstehenden Karkasslage auf die Karkasstrommel,
c) Einfahren der beiden Balgträger, sodass sich die Außendurchmesser der Bälge gegenüber dem Außendurchmesser der Karkasstrommel verringern, und die Überstände der ersten Karkasslage entlang den Schultern der Karkasslage verlaufen,
d) Setzen von Kernpaketen aus Wulstkernen mitsamt Kernprofilen auf die seitlichen Überstände der ersten Karkasslage im Bereich der Schultern der Karkasstrommel,
e) Anrollen der Kernpakete seitlich an die Karkasslage,
f) Auflegen einer zweiten Karkasslage, die derart breit ist, dass sie seitlich der Kernpakete zumindest bis in Bereich seitlich der Wulstkerne, höchstens bis auf die Überstände der ersten Karkasslage reicht,
g) Anrollen der zweiten Karkasslage an die Kernpakete,
h) Aufblähen der Bälge zum Umschlagen der seitlichen Überstände der ersten Karkasslage entlang der Kernpakete und der zweiten Karkasslage,
i) Komplettieren der Reifenkarkasse in bekannter Weise.

Gemäß der Erfindung sind daher die in den Wulstbereichen befindlichen Endabschnitte der zweiten Karkasslage zwischen den Kernpaketen und der ersten Karkasslage eingeschlossen und in Kontakt mit diesen Bauteilen, sodass durch den "Verbund" dieser Bauteile ein einwandfreies Ausbilden der Wulstbereiche gewährleistet ist. Das Herumschlagen der ersten Karkasslage um die zweite Karkasslage beim Aufbau der Reifenkarkasse verhindert das Entstehen von Lufteinschlüssen und dadurch das Ausbilden der unerwünschten eingezogenen Vertiefungen an der Außenseite des vulkanisierten Reifens.

Bei einer bevorzugten Ausführung endet die zweite Karkasslage jeweils seitlich des beginnenden Umbugabschnittes der ersten Karkasslage.

Bei Reifen, die besonders hohen Belastungen im Betrieb ausgesetzt sind, ist es von Vorteil, wenn die in den Wulstbereichen außen verlaufenden Abschnitte der ersten Karkasslage entlang der zweiten Karkasslage bis in einen Bereich radial innerhalb der radial inneren Gürtellage verläuft, sodass die radial innere Gürtellage mit Endabschnitten der ersten Karkasslage überlappt.

Bei einer alternativen Ausführung enden die in den Wulstbereichen außen verlaufenden Abschnitte der ersten Karkasslage in Richtung Seitenwände jeweils als Hochschlag.

Vorzugsweise verlaufen die Festigkeitsträger in der ersten Karkasslage und der zweiten Karkasslage zumindest teilweise in radialer Richtung. Hierbei verlaufen sie mindestens in Bereichen einer Karkasslage, die nicht unter dem profilierten Laufstreifen angeordnet sind und noch nicht in den Wulstbereichen angeordnet sind, über den gesamten Reifenumfang in radialer Richtung. Genauso können die Festigkeitsträger aber auch in einer oder beiden der Karkasslagen vollständig in radialer Richtung verlaufen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 und Fig. 2 Prinzipdarstellungen von Querschnitten einer Reifenkarkasse für einen Fahrzeugluftreifen mit unterschiedlichen Ausführungsvarianten der Erfindung und
Fig. 3 bis Fig. 7 aufeinanderfolgende Verfahrensstadien beim Aufbau einer Reifenkarkasse auf einer Karkasstrommel einer Karkassmaschine.

In der nachfolgenden Beschreibung beziehen sich Begriffe wie "innen", "außen", "innenseitig" und "außenseitig" auf die Lage des betreffenden Bauteils in Bezug auf den Reifeninnraum.

Gemäß der Erfindung ausgeführte Fahrzeugluftreifen sind Reifen in Radialbauart für Kraftfahrzeuge, vorzugweise Reifen für Personenkraftwagen, SUVs, Vans oder Light-Trucks.

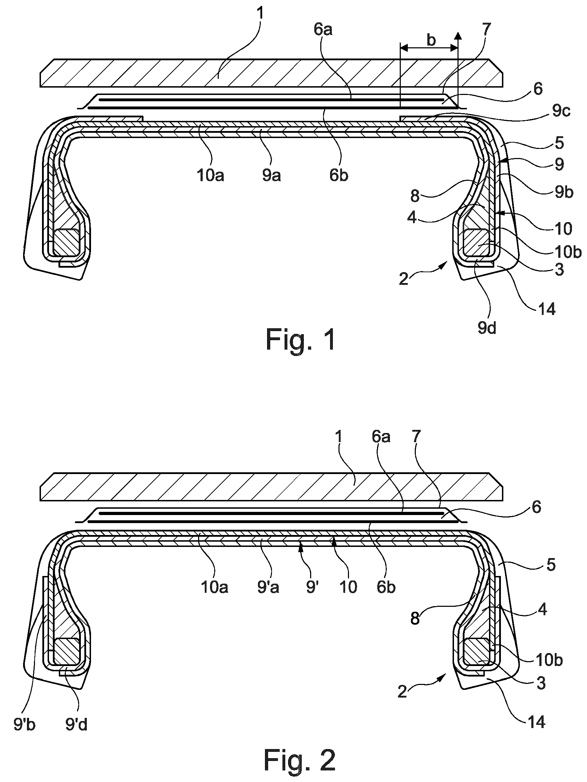

Fig. 1 und Fig. 2 zeigen jeweils eine Reifenkarkasse mit Wulstbereichen 2 mit Wulstkernen 3 und Kernprofilen 4, Seitenwände 5, Hornprofilen 14, einer Innenschicht 8 und einer Karkasseinlage aus einer ersten Karkasslage 9 (Fig. 1), 9' (Fig. 2) und einer zweiten Karkasslage 10. Oberhalb der Reifenkarkasse sind jeweils ein Laufstreifen 1 und ein im Beispiel zwei Gürtellagen 6a und 6b aufweisender Gürtel 6 mit einer Gürtelbandage 7 gezeigt, wobei die Reifenkarkasse mit diesen Bauteilen zum Rohreifen aufgebaut wird, welcher anschließend vulkanisiert wird. Der Reifen kann noch weitere Bauteile, beispielsweise Wulstverstärkerlagen, aufweisen.

Die beiden Karkasslagen 9, 9' und 10 enthalten insbesondere textile Festigkeitsträger, beispielsweise aus Polyester oder Polyamid, welche in ein Gummimaterial, die Karkassgummierung, eingebettet sind und innerhalb der Karkasslagen 9, 9', und 10 zumindest im Wesentlichen in radialer Richtung, daher im rechten Winkel zur Umfangsrichtung des Reifens, verlaufen.

Bei der in Fig. 1 gezeigten Ausführung ist die Karkasslage 9 als sogenannte C-Lage ausgeführt. Die Karkasslage 9 weist einen Abschnitt 9a auf, welcher innerhalb und in Kontakt mit der Innenschicht 8 durchgehend von Wulstbereich 2 zu Wulstbereich 2 verläuft. Die Karkasslage 9 umläuft jeweils mit einem Umbugabschnitt 9d die Wulstkerne 3 von innen nach außen und verläuft anschließend jeweils mit einem Abschnitt 9b vorerst entlang der Kernprofile 4 und dann in Kontakt mit der Karkasslage 10 und bis in einen Bereich radial innerhalb der radial inneren Gürtellage 6b, sodass die radial innere Gürtellage 6b mit Endabschnitten 9c der Karkasslage 9 überlappt. Der überlappte Bereich weist jeweils in axialer Richtung vorzugsweise eine Breite b von 5,00 mm bis 25,00 mm auf.

Die zweite Karkasslage 10 verläuft ebenfalls durchgehend von Wulstbereich 2 zu Wulstbereich 2. Radial außerhalb der Wulstbereiche 2 weist die Karkasslage 10 einen Abschnitt 10a auf, welcher zwischen den Abschnitten 9a und 9b der Karkasslage 9 und in Kontakt mit diesen Abschnitten 9a, 9b verläuft. In die Wulstbereiche 2 verläuft die Karkasslage 10 mit einem Endabschnitt 10b zwischen den Kernprofilen 4 und den Wulstkernen 3, in Kontakt zu diesen und zum Abschnitt 9b der Karkasslage 9. Die Abschnitte 10b enden außen, in axialer Richtung seitlich der Wulstkerne 3, insbesondere jeweils seitlich des beginnenden Umbugabschnittes 9d der Karkasslage 9.

Bei der in Fig. 2 gezeigten Ausführung entspricht die Anordnung und der Verlauf der Karkasslage 10 jener der Ausführungsform gemäß Fig. 1. Die erste Karkasslage 9' verläuft analog zur ersten Ausführungsform mit einem Abschnitt 9'a durchgehend zwischen beiden Wulstbereichen 2, umläuft die Wulstkerne 3 mit Umbugabschnitten 9'd von innen nach außen und endet schließlich in Richtung Seitenwand 5 als üblicher Hochschlag 9'b.

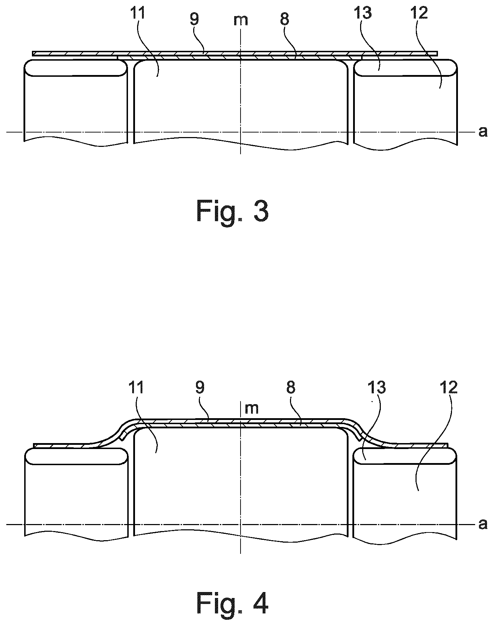

Fig. 3 bis Fig. 7 zeigen aufeinanderfolgende Aufbauschritte beim Aufbauen einer Reifenkarkasse eines gemäß Fig. 1 ausgeführten Fahrzeugluftreifens auf der ersten Stufe einer Reifenaufbaumaschine, einer Karkassmaschine. Die Figuren zeigen jeweils Teile einer einen zylindermantelförmigen Außenumfang aufweisenden expandierende Karkasstrommel 11 und zweier seitlich der Karkasstrommel 11 angeordneter, ebenfalls expandierbarer Balgträger 12 mit aufblähbaren Bälgen 13. Die senkrechte gestrichelte Linie m verdeutlich die Symmetrieebene der Karkasstrommel 11, die gestrichelte Linie a verdeutlicht die Achse der Karkasstrommel 11, das heißt, unterhalb der Linie a und spiegelbildlich zu dieser befinden sich die nicht dargestellten zweiten Hälften der Karkasstrommel 11, der Balgträger 12 und der Bälge 13.

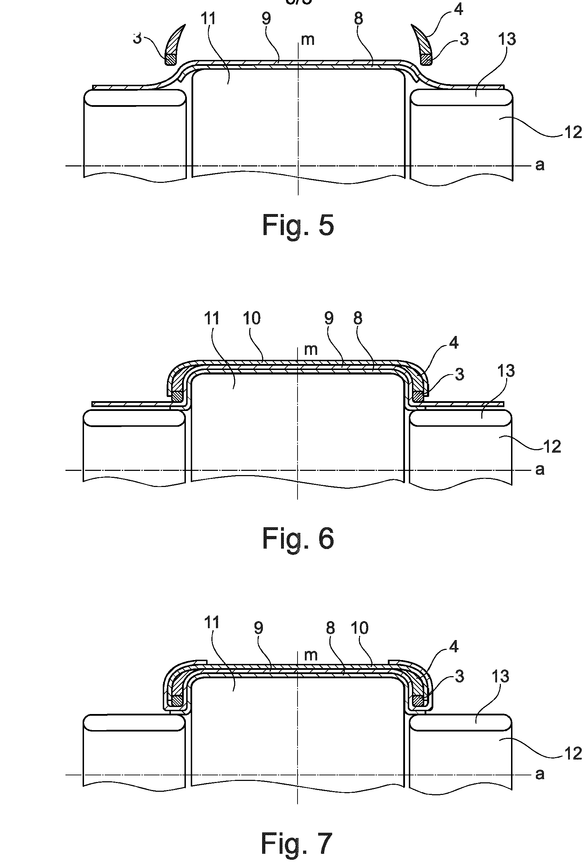

In der in Fig. 3 dargestellten Position bilden die Außenseiten der nicht aufgeblähten Bälge 13 gemeinsam mit der Außenfläche der Karkasstrommel 11 eine im wesentlichen einheitliche zylindermantelförmige Auflagefläche. Auf diese Auflagefläche sind zuerst die Innenschicht 8 - eine Schicht aus einer Kautschukmischung - und dann die Karkasslage 9 aufgelegt mit Überständen auf den Bälgen 13 und anschließend durch ein Überlappen ihrer Endabschnitte miteinander verbunden bzw. gespleißt worden. Anschließend werden die beiden Balgträger 12 etwas eingefahren, sodass sich die Außendurchmesser der Bälge 13 gegenüber dem Außendurchmesser der Karkasstrommel 10 verringern (Fig. 4). Nun werden die Wulstkerne 3 mitsamt den Kernprofilen 4, die als "Kernpakete" hergestellt wurden, auf die Überstände bei den nun abgesetzten Schulterbereiche der Karkasslage 9 gesetzt (Fig. 5) und seitlich an die Karkasslage 9 angerollt (Fig. 6). Anschließend wird von außen auf die Karkasslage 9 und die Kernpakete die Karkasslage 10 aufgelegt (Fig. 6), überlappend gespleißt und ihre seitlich der Kernpakete befindlichen Abschnitte werden an die Kernpakete durch Anrollen angeheftet. Durch Aufblähen der Bälge 13 werden die seitlichen Überstände der Karkasslage 9 entlang der Karkasslage 10 umgeschlagen (Fig. 7). Durch Setzen von Seitenwandprofilen wird die Reifenkarkasse in bekannter Weise fertig aufgebaut, der Karkassmaschine entnommen, zur zweiten Stufe der Reifenaufbaumaschine transferiert und hier zum Rohreifen unter Ergänzen des Gürtels und des Laufstreifens aufgebaut.

### Bezugszeichenliste

- 1: Laufstreifen
- 2: Wulstbereich
- 3: Wulstkern
- 4: Kernprofil
- 5: Seitenwand
- 6: Gürtel
- 6a, 6b: Gürtellage
- 7: Gürtelbandage
- 8: Innenschicht
- 9, 9': erste Karkasslage
- 9a, 9b, 9'a: Abschnitt
- 9'b: Hochschlag
- 9c: Endabschnitt
- 9d, 9'd: Umbugabschnitt
- 10: zweite Karkasslage
- 10a: Abschnitt
- 10b: Endabschnitt
- 11: Karkasstrommel
- 12: Balgträger
- 13: Balg
- 14: Hornprofil
- a: Achse
- b: Breite
- m: Symmetrieebene

## Patentansprüche

1. Fahrzeugluftreifen mit einem profilierten Laufstreifen (1), einem zumindest zwei Lagen (6a, 6b) aufweisenden Gürtel (6), einer Innenschicht (8), Wulstbereichen (2) mit Wulstkernen (3) und Kernprofilen (4), einer Karkasseinlage mit einer ersten Karkasslage (9, 9') und einer zweiten Karkasslage (10), wobei die erste Karkasslage (9, 9') einen von Wulstbereich (2) zu Wulstbereich (2) und entlang der Innenschicht (8) durchgehend verlaufenden Abschnitt (9a, 9'a), an den Wulstkernen (3) in axialer Richtung verlaufende Umbugabschnitte (9d, 9'd) und weitere außen in den Wulstbereichen (2) verlaufende Abschnitte (9b, 9'b) aufweist, und wobei die zweite Karkasslage (10) einen in Kontakt mit der ersten Karkasslage (9, 9') verlaufenden von Wulstbereich (2) zu Wulstbereich (2) durchgehenden Abschnitt (10a) aufweist und in den Wulstbereichen (2) endet, wobei die zweite Karkasslage (10) in den Wulstbereichen (2) zwischen der ersten Karkasslage (9, 9') auf der einen Seite und den Kernprofilen (4) auf der anderen Seite sowie in Kontakt mit diesen Bauteilen verläuft,
**dadurch gekennzeichnet,**
**dass** die zweite Karkasslage (10) außen seitlich der Wulstkerne (3) sowie in Kontakt mit den Wulstkernen (3) endet.

2. Fahrzeugluftreifen nach Anspruch 1, **dadurch gekennzeichnet, dass** die zweite Karkasslage (10) jeweils seitlich des beginnenden Umbugabschnittes (9d, 9'd) der ersten Karkasslage (9, 9') endet.

3. Fahrzeugluftreifen nach Anspruch 1 oder 2, **dadurch gekennzeichnet, dass** die in den Wulstbereichen (2) außen verlaufenden Abschnitte (9b) der ersten Karkasslage (9) entlang der zweiten Karkasslage (10) bis in einen Bereich radial innerhalb der radial inneren Gürtellage (6b) verlaufen, sodass die radial innere Gürtellage (6b) mit Endabschnitten (9c) der ersten Karkasslage (9) überlappt.

4. Fahrzeugluftreifen nach Anspruch 1 oder 2, **dadurch gekennzeichnet, dass** die in den Wulstbereichen (2) außen verlaufenden Abschnitte (9'b) der ersten Karkasslage (9') in Richtung Seitenwände (5) jeweils als Hochschlag (9'b) enden.

5. Verfahren zum Aufbau einer Reifenkarkasse eines Fahrzeugluftreifens auf einer Karkassmaschine mit einer expandierbaren Karkasstrommel (11) und zwei seitlich der Karkasstrommel (11) angeordneten expandierbaren Balgträgern (12) mit aufblähbaren Bälgen (13),
mit folgenden nacheinander ablaufenden Schritten:
a) Expandieren der Balgträger (12), sodass die Außenflächen der unaufgeblähten Bälge (13) gemeinsam mit der Außenfläche der expandierten Karkasstrommel (11) eine einheitliche zylindrische Auflagefläche bilden,
b) Aufbringen einer Innenschicht (8) und einer ersten, seitlich über die Karkasstrommel (11) überstehenden Karkasslage (9, 9') auf die Karkasstrommel (11),
c) Einfahren der beiden Balgträger (12), sodass sich die Außendurchmesser der Bälge (13) gegenüber dem Außendurchmesser der Karkasstrommel (11) verringern und die Überstände der ersten Karkasslage (9, 9') entlang von Schultern der Karkasstrommel (11) verlaufen,
d) Setzen von Kernpaketen aus Wulstkernen (3) und Kernprofilen (4) auf die seitlichen Überstände der ersten Karkasslage (9, 9') an den Schultern der Karkasstrommel (11),
e) Anrollen der Kernpakete seitlich an die Karkasslage (9,9'),
f) Auflegen einer zweiten Karkasslage (10), die derart breit ist, dass sie seitlich der Kernpakete zumindest bis in den Bereich seitlich der Wulstkerne (3), höchstens bis auf die Überstände der ersten Karkasslage (9, 9') reicht,
g) Anrollen der zweiten Karkasslage (10) an die Kernpakete,
h) Aufblähen der Bälge (13) zum Umschlagen der seitlichen Überstände der ersten Karkasslage (9, 9') entlang der Kernpakete und der zweiten Karkasslage (10),
i) Komplettieren der Reifenkarkasse in bekannter Weise.

## Claims

1. Pneumatic vehicle tyre having a profiled tread (1), a belt (6) having at least two plies (6a, 6b), an inner layer (8), bead regions (2) having bead cores (3) and core profiles (4), a carcass inlay having a first carcass ply (9, 9') and a second carcass ply (10), wherein the first carcass ply (9, 9') has a portion (9a, 9'a) running continuously from bead region (2) to bead region (2) and along the inner layer (8), bent-over portions (9d, 9'd) running in the axial direction on the bead cores (3) and further portions (9b, 9'b) running on the outside in the bead regions (2), and wherein the second carcass ply (10) has a continuous portion (10a) that is in contact with the first carcass ply (9, 9'), runs from bead region (2) to bead region (2) and ends in the bead regions (2), wherein, in the bead regions (2), the second carcass ply (10) runs between the first carcass ply (9, 9') on one side and the core profiles (4) on the other side and in contact with these components,
**characterized**
**in that** the second carcass ply (10) ends on the outer side of the bead cores (3) and in contact with the bead cores (3).

2. Pneumatic vehicle tyre according to Claim 1, **characterized in that** the second carcass ply (10) in each case ends to the side of the beginning of the bent-over portion (9d, 9'd) of the first carcass ply (9, 9').

3. Pneumatic vehicle tyre according to Claim 1 or 2, **characterized in that** the portions (9b) of the first carcass ply (9) running on the outside in the bead regions (2) run along the second carcass ply (10) as far as a region radially on the inside of the radially inner belt ply (6b), so that the radially inner belt ply (6b) overlaps with end portions (9c) of the first carcass ply (9).

4. Pneumatic vehicle tyre according to Claim 1 or 2, **characterized in that** the portions (9'b) of the first carcass ply (9') running on the outside in the bead regions (2) in each case end as a turn-up (9'b) towards the sidewalls (5).

5. Method for building up a tyre carcass of a pneumatic vehicle tyre on a carcass machine having an expandable carcass drum (11) and two expandable bladder supports (12), which are arranged to the side of the carcass drum (11) and have inflatable bladders (13),
the method comprising the following successive steps:
a) expanding the bladder supports (12), so that the outer surfaces of the uninflated bladders (13) form, together with the outer surface of the expanded carcass drum (11), a uniform cylindrical bearing surface,
b) applying an inner layer (8) and a first carcass ply (9, 9'), which projects beyond the side of the carcass drum (11), to the carcass drum (11),
c) retracting the two bladder supports (12), so that the outer diameters of the bladders (13) decrease with respect to the outer diameter of the carcass drum (11) and the projections of the first carcass ply (9, 9') run along shoulders of the carcass drum (11),
d) placing core assemblies of bead cores (3) and core profiles (4) onto the lateral projections of the first carcass ply (9, 9') on the shoulders of the carcass drum (11),
e) rolling the core assemblies onto the side of the carcass ply (9, 9'),
f) placing a second carcass ply (10), which has such a width that it extends to the side of the core assemblies at least as far as the region to the side of the bead cores (3), at most as far as the projections of the first carcass ply (9, 9'),
g) rolling the second carcass ply (10) onto the core assemblies,
h) inflating the bladders (13) to turn over the lateral projections of the first carcass ply (9, 9') along the core assemblies and the second carcass ply (10),
i) completing the tyre carcass in a known manner.

## Revendications

1. Pneumatique de véhicule avec une bande de roulement (1) profilée, une ceinture (6) comportant au moins deux nappes (6a, 6b), une couche intérieure (8), des zones de talon (2) avec des tringles de talon (3) et des apex (4), un insert de carcasse avec une première nappe de carcasse (9, 9') et une deuxième nappe de carcasse (10), la première nappe de carcasse (9, 9') comportant une section (9a, 9'a) s'étendant en continu de la zone de talon (2) à la zone de talon (2) et le long de la couche intérieure (8), des sections repliées (9d, 9'd) s'étendant dans le sens axial sur les tringles de talon (3) et d'autres sections (9b, 9'b) s'étendant côté extérieur dans les zones de talon (2), et la deuxième nappe de carcasse (10) comportant une section continue (10a) s'étendant d'une zone de talon (2) à une zone de talon (2) en contact avec la première nappe de carcasse (9, 9') et se terminant dans les zones de talon (2), la deuxième nappe de carcasse (10) dans les zones de talon (2) s'étendant entre la première nappe de carcasse (9, 9') d'un côté et les apex (4) de l'autre côté en contact avec lesdits composants,
**caractérisé en ce**
**que** la deuxième nappe de carcasse (10) se termine côté extérieur à côté des tringles de talon (3) et en contact avec les tringles de talon (3).

2. Pneumatique de véhicule selon la revendication 1, **caractérisé en ce que** la deuxième nappe de carcasse (10) se termine respectivement à côté du début de la section repliée (9d, 9'd) de la première nappe de carcasse (9, 9').

3. Pneumatique de véhicule selon la revendication 1 ou 2, **caractérisé en ce que** les sections (9b) de la première nappe de carcasse (9) s'étendant côté extérieur dans les zones de talon (2) s'étendent le long de la deuxième nappe de carcasse (10) jusque dans une zone à l'intérieur radialement de la nappe de ceinture radialement intérieure (6b) si bien que la nappe de ceinture radialement intérieure (6b) chevauche des sections d'extrémité (9c) de la première nappe de carcasse (9).

4. Pneumatique de véhicule selon la revendication 1 ou 2, **caractérisé en ce que** les sections (9'b) de la première nappe de carcasse (9') s'étendant côté extérieur dans les zones de talon (2) se terminent respectivement comme une butée supérieure (9'b) en direction des flancs (5).

5. Procédé de fabrication d'une carcasse de pneu d'un pneumatique de véhicule sur une machine à carcasse avec un tambour de carcasse extensible (11) et deux supports de vessie extensibles (12) disposés à côté du tambour de carcasse (11) avec des vessies gonflables (13),
avec des étapes suivantes se déroulant les unes après les autres :
a) dilatation des supports de vessie (12) si bien que les surfaces extérieures des vessies (13) non gonflées forment conjointement avec la surface extérieure du tambour à carcasse (11) dilatée une surface d'appui cylindrique uniforme,
b) application d'une couche intérieure (8) et d'une première nappe de carcasse (9, 9') faisant saillie latéralement au-delà du tambour de carcasse (11) sur le tambour de carcasse (11),
c) rétraction des deux supports de vessie (12) si bien que les diamètres extérieurs des vessies (13) diminuent par rapport au diamètre extérieur du tambour de carcasse (11) et que les saillies de la première nappe de carcasse (9, 9') s'étendent le long d'épaulements du tambour de carcasse (11),
d) placement de paquets de talon de tringles de talon (3) et d'apex (4) sur les saillies latérales de la première nappe de carcasse (9, 9') sur les épaulements du tambour de carcasse (11),
e) roulage des paquets de talon latéralement sur la nappe de carcasse (9,9'),
f) placement d'une deuxième nappe de carcasse (10) d'une largeur telle qu'elle s'étend à côté des paquets de talon au moins jusque dans la zone à côté des tringles de talon (3) au plus jusqu'aux saillies de la première nappe de carcasse (9, 9'),
g) roulage de la deuxième nappe de carcasse (10) sur les paquets de talon,
h) gonflage des vessies (13) pour retourner les saillies latérales de la première nappe de carcasse (9, 9') le long des paquets de talon et de la deuxième nappe de carcasse (10),
i) achèvement de la carcasse de pneu d'une manière connue.
